## Europäisches Patentamt

## European Patent Office

## Office européen des brevets

(19)

(11) Veröffentlichungsnummer: **0 191 195**
**B1**

(12) **EUROPÄISCHE PATENTSCHRIFT**

(45) Veröffentlichungstag der Patentschrift:
02.08.89

(21) Anmeldenummer: **85200797.0**

(22) Anmeldetag: **20.05.85**

(51) Int. Cl.⁴: **H 02 K 15/00**

(54) Vorrichtung zur automatischen Fertigung von Statoren für Elektromotoren.

(30) Priorität: **15.02.85 CH 717/85**

(43) Veröffentlichungstag der Anmeldung:
**20.08.86 Patentblatt 86/34**

(45) Bekanntmachung des Hinweises auf die Patenterteilung:
**02.08.89 Patentblatt 89/31**

(84) Benannte Vertragsstaaten:
**CH DE FR GB IT LI**

(56) Entgegenhaltungen:
**CH-A-412 084**
**CH-A-528 171**
**DE-A-2 750 134**
**GB-A-2 069 376**
**GB-A-2 092 029**
**US-A-4 106 185**

(73) Patentinhaber: **MICAFIL AG, Badenerstrasse Nr.780, CH- 8048 Zürich (CH)**

(72) Erfinder: **Nussbaumer, Manfred, Turnerweg 5, CH- 8953 Dietikon (CH)**
Erfinder: **Fischer, Bruno, Schönegg 40, CH- 8953 Dietikon (CH)**

(74) Vertreter: **Schütz, Peter, Dipl.- Ing., Dr. Dieter von Bezold Dipl.- Ing. Peter Schütz Dipl.- Ing. Wolfgang Heusler Brienner Strasse 52, D-8000 München 2 (DE)**

**Beschreibung**

Die vorliegende Erfindung betrifft eine Vorrichtung zur automatischen Fertigung von Statoren für Elektromotoren.

Bekannte Rundtisch-Wickelautomaten ermöglichen eine Fertigung von Statoren, wobei das Bewickeln, das Anlegen der Wicklungsenden an die Anschlußstücke, das Verbinden derselben, beispielsweise durch Schweißen oder Löten, sowie das elektrische Prüfen voll- oder halbautomatisch erfolgt. Ein wesentlicher Nachteil besteht dabei vor allem in der begrenzten Ausbaumöglichkeit der Zusatzvorrichtungen und der taktgebundene Arbeitsablauf, bei welchem die Taktzeit den am längsten dauernden Arbeitsvorgang angepaßt werden muß, so daß die einzelnen Bearbeitungsstellen des Rundtisches nicht immer optimal ausgenützt werden können.

Aus der DE-A-2 750 134 ist eine Fertigungsstraße für Anker mit umlaufenden Kettenförderern bekannt, die mit drei unterschiedlich gekennzeichneten Typen von Auflagern für die Anker arbeitet, wobei nach Beendigung eines ersten Bearbeitungsvorganges der betreffende Anker in das zweite Auflager umgesetzt wird, um einen zweiten Bearbeitungsvorgang zu durchlaufen, nach welchem er schließlich in das dritte Auflager für einen dritten Bearbeitungsvorgang umgesetzt wird. Die unterschiedlichen Auflager oder Halterungen werden in den einzelnen Bearbeitungsstationen abgetastet und erkannt, so daß jeweils der richtige Bearbeitungsvorgang für den betreffenden Anker durchgeführt wird. Auch ist es aus der DE-A-2 750 134 bei einem Kettenförderer mit Rollenlagern bekannt, ein Werkstück zusammen mit einem Werkstückhalter von der Fertigungsstrasse abzuheben, un dad Werkstück zu bearbeiten.

Ferner ist in der DE-A-3 330 687 (veröffentlich 14-03-85) eine Vorrichtung zur automatischen Fertigung von Ankern für elektrische Kleinmotoren vorgeschlagen, bei welcher die Werkzeughalten durch zwei ständig umlaufende Transportbänder durch Reibschluß transportiert werden und an den einzelnen Bearbeitungsstationen abgehoben und fixiert sowie mit einem geeigneten Antrieb für den Bearbeitungsvorgang gekuppelt werden. Hierbei können die Anker beim Durchlaufen der einzelnen Bearbeitungsstationeen in ihrem Werkstückhalter bleiben und brauchen nicht umgesetzt zu werden.

Ausgehend vom diesem Stand der Technik besteht die Aufgabe der Erfindung in einer besonders zweckmäßigen Ausgestaltung des Werkstückhalters, so daß ein unbehindertes Arbeiten sowohl in der Wickelstation als auch in allen nachgeschalteten Bearbeitungsstationen ermöglicht wird. Diese Aufgabe wird durch die im Anspruch 1 angegebenen Merkmale gelöst Weiterbildungen der Erfindung sind in den Unteransprüchen gekennzeichnet.

Durch die erfindungsgemäße Portalbauweise der Werkstückhalter, die ein Bewickeln und Bearbeiten der Statoren von oben und unten sowie beidseitig quer zur Transportrichtung ermöglicht, wird erreicht, daß die im Werkstückhalter eingespannten Statoren während des gesamten Fertigungsablaufes in allen Bearbeitungsstationen im Werkstückhalter eingespannt bleiben können, wodurch sich die Beschickung der einzelnen Stationen mit allen damit verbundenen Nachteilen, einschliesslich des erforderlichen Platzbedarfes, erübrigt und die dadurch möglichen Fehlerquellen und Zeitverluste vermieden werden und die Fertigungskapazität in vollem Umfang ausgenützt werden kann. Ein weiterer Vorteil der Erfindung besteht in der schnellen Durchlaufzeit der Statoren bis zur Fertig stellung, ohne dass eine Zwischenlagerung zwischen den einzelnen Bearbeitungsstationen erforderlich wird.

In der Zeichnung ist ein Ausführungsbeispiel des erfindungsgemässen Werkstückhalters schematisch dargestellt.

Es zeigen

Fig. 1 einen Querschnitt eines erfindungsgemässen Werkstückhalters und
Fig. 2 und 2a eine Seitenansicht und eine Draufsicht einer Fertigungsstrasse.

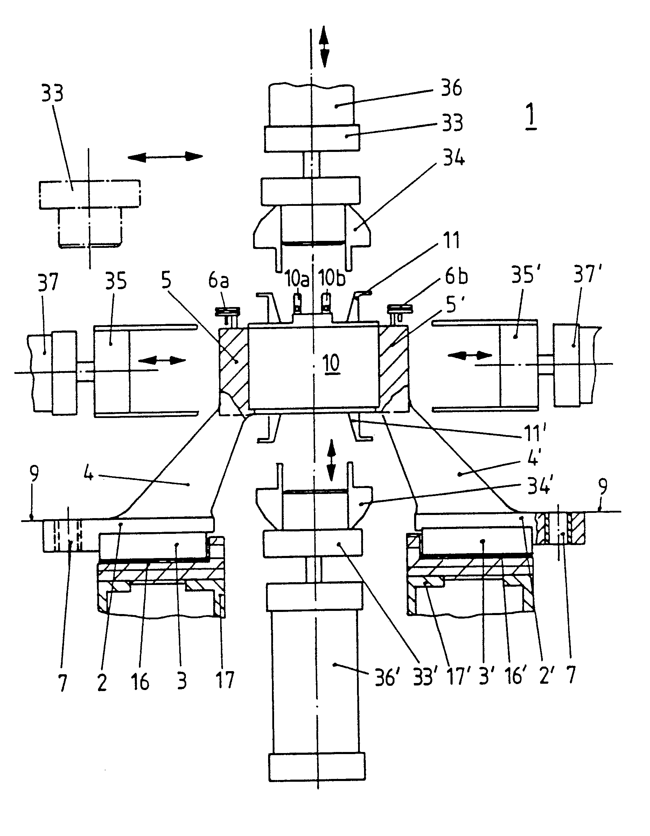

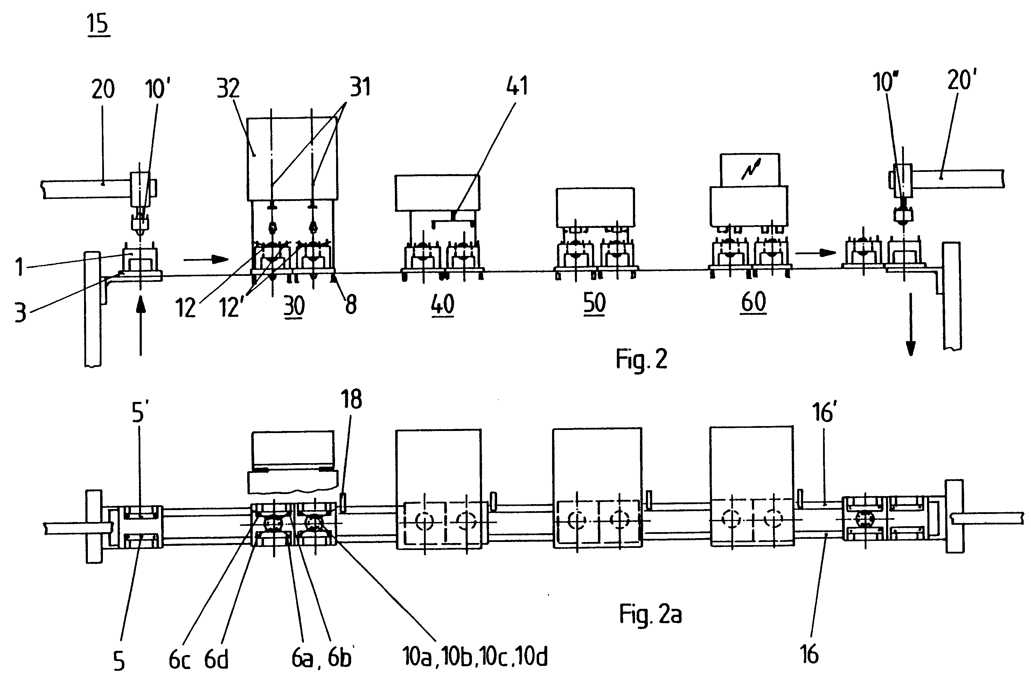

In Fig. 1 ist mit 1 ein Werkstückhalter bezeichnet, in welchem ein Stator 10 mit vier Drahtanschlußstücken 10, 10b, 10c, 10d für die Drahtenden 12' eingespannt ist, wobei der Werkstückhalter 1, beispielsweise in einer Wickelstation 30. (siehe auch Fig. 2, 2a) dargestellt ist. Der Werkstückhalter 1 ist portalartig so ausgebildet, dass dessen beide Füsse 2, 2' mit Führungsplatten 3, 3' auf je einem Transportband 16, 16' aufliegen, wobei beide Transportbänder 16, 16' synchron laufen. Die Füsse 2, 2' gehen in nach oben sich verengende Stützen 4, 4' über und bilden Haltebacken 5, 5', die zur Aufnahme des Stators 10 dienen. Durch diese Ausbildung wird beispielsweise in einer Wickelstation 30 ein Zuführen von Wickelformen 34, 34' in der Weise ermöglicht, dass die unteren Wickelformen 34' zwischen den portalartigen Stützen 4, 4' in den von den Haltebacken 5, 5' gehaltenen Stator 10 ungehindert eingeführt werden können. Analog dazu wird die obere Wickelform 34 in den Stator 10 von oben eingesetzt. Gleichzeitig werden seitlich über Haltebacken 5, 5' beidseitig Wickelformhalter 35, 35' eingeschoben. Als Halterung für die Wicklungs-Drahtenden 12' einer Wicklung 12 sind an beiden Haltebacken 5, 5' je zwei Wickeldraht-Hilfsklemmen 6a, 6b, 6c, 6d vorgesehen. Ferner ermöglicht die erfindungsgemässe Ausbildung des Werkstückhalters 1 ein unbehindertes Arbeiten an allen, in den Fig. 2 und 2a aufgeführten Bearbeitungsstationen 30, 40, 50, 60, ohne dass der Stator 10 aus dem Werkstückhalter 1 entnommen bzw. in eine andere Position gebraucht werden muss.

Nach diesen Vorbereitungen für die Weiterbearbeitung der Statoren erfolgt das Bewickeln, das Anlegen der Wicklungs drahtenden an die Drahtanschlußstücke 10a, 10b, 10c, 10d, das Verbinden derselben, beispielsweise durch Schweissen, Löten oder Crimpen, sowie ein elektrisches Prüfen.

Zur besseren Verständnis zeigen die Fig. 2 und 2a eine übersichtliche Darstellung einer Fertigungsstrasse 15 mit den Stator-Belade- 20 und Entnahme- 20' Stationen und den Bearbeitungsstationen 30, 40, 50, 60. Dabei ist mit 30 eine Wickelstation, mit 40 eine Wicklungsdrahtenden-Anlegestation, mit 50 eine Station zum Verbinden der Wicklungsenden, beispielsweise durch Schweissen, Löten oder Crimpen und mit 60 eine elektrische Prüfstation bezeichnet.

Die von den Transportbändern 16, 16' reibschlüssig mitgenommenen Werkstückhalter 1 sind gegenüber den dauernd umlaufenden Transportbändern 16, 16' in den einzelnen Stationen 20, 30, 40, 50, 60, 20' einzeln und/oder gruppenweise durch gesteuerte Stopanschläge 18 anhaltbar ausgebildet, wodurch ein kontinuierlicher, taktunabhängiger Arbeitsablauf gewährleistet ist. Ein zweites nicht dargestelltes Transportband-Paar, beispielsweise in der unteren Ebene der Vorrichtung angeordnet, dient zum Rücktransport der leeren Werkstückhalter 1 zur Beladestation 20, wobei die beiden Transportband-Paare über Lifte in der Stator-Entnahmestation 20' in Pfeilrichtung von oben nach unten und in der Beladestation 20 in Pfeilrichtung von unten nach oben in Verbindung stehen. Zur Positionierung und Fixierung der Werkstückhalter 1 in jeder Bearbeitungsstation 30, 40, 50, 60 dienen Einspannflächen 9 der Werkstückhalter 1, wobei in jeder Bearbeitungsstation 30, 40, 50, 60 Positionier-Haltebolzen 8 vorgesehen sind, die in Positionierbüchsen 7 (Fig.1) der Werkstückhalter 1 eingreifen und den Werkstückhalter 1 von den Transportbändern 16, 16' abheben, positionieren und fixieren.

In der Fertigungsstrasse 15 ist mindestens eine Wickelstation 30 (siehe auch Fig. 1) mit einem Wickelgetriebe 32 für zwei Wickelspindeln 31 vorgesehen. Sowohl das Zu- und Wegführen der Wickelformen 34, 34' mittels Haltern 33, 33' als auch das Ein- und Herausschieben der Wickelformhalter 35, 35' in bzw. aus dem Stator 10 erfolgt durch Zylinder-/Kolben-Einheiten 36, 36' bzw. 37, 37', wobei der strichliert dargestellte Halter 33 und der nicht dargestellte Halter (33') während des eigentlichen Bewicklungsvorganges seitlich ausgefahren sind. Das Bewickeln der Statoren 10 erfolgt in an sich bekannter Weise, wobei die Wicklung 12 auf Wickelkopfabstützungen 11, 11' gewickelt wird und die Wicklungs-Drahtenden 12' in den Wickeldraht-Hilfsklemmen 6a, 6b, 6c, 6d der Haltebacken 5, 5' gehalten werden.

Nachfolgend wird der Werkstückhalter 1 mit dem bereits bewickelten Stator 10 mit den in den Wickeldraht-Hilfsklemmen 6a, 6b, 6c, 6d gehaltenen Wicklungs-Drahtenden 12' in die nachgeschaltete Wicklungsenden-Anlegestation 40 gebracht. Durch zwei parallelbetätigbare in den Koordinatenachsen X, Y, Z freiprogrammierbare computergesteuerte Greifer 41 werden die in den Wickeldraht-Hilfsklemmen 6a, 6b, 6c, 6d gehaltenen Wicklungs-Drahtenden 12' paarweise übernommen und an die entsprechenden Drahtanschlussstücke 10a, 10b, 10c, 10d angelegt. In der nachgeschalteten Bearbeitungsstation 50 werden die Wicklungs-Drahtenden 12' an den Drahtanschlußstücken 10a, 10b, 10c, 10d des Stators 10 durch Schweissen Löten oder Crimpen verbunden sowie in der Prüfstation 60 elektrisch geprüft und in der Stator-Entnahmestation 20' die fertigen Statoren 10'' abgenommen.

**Aufstellung der verwendeten Bezugszeichen**

| | |
|---|---|
| 1 | Werkstückhalter, portalartig ausgebildet |
| 2, 2' | Füsse |
| 3, 3' | Führungsplatten |
| 4, 4' | Stützen |
| 5, 5' | Haltebacken |
| 6a, 6b, 6c, 6d | Wickeldraht-Hilfsklemmen |
| 7 | Positionierbüchsen |
| 8 | Positionier-Haltebolzen |
| 9 | Einspannflächen |
| 10 | Stator |
| 10a, 10b, 10c, 10d | Drahtanschlusstücke |
| 10' | unbewickelte Statoren |
| 10'' | fertige Statoren |
| 11, 11' | Wickelkopfabstützungen |
| 12 | Wicklung |
| 12' | Wicklungs-Drahtenden |
| 15 | Fertigungsstrasse |
| 16, 16' | Transportbänder, synchron antreibbar |
| 17, 17' | Träger |
| 18 | Stopanschläge |
| 20 | Stator-Beladestation für die Anlieferung unbewickelter Statoren |
| 20' | Stator-Entnahmestation für die Abnahme fertiger Statoren |
| 30 | Wickelstation mit zwei gemeinsam antreibbaren Wickelspindeln |
| 31 | Wickelspindeln |
| 32 | Wickelgetriebe |
| 33, 33' | Halter, vertikal und horizontal verschiebbar |
| 33 - strichliert | Halter seitlich ausgefahren |
| 34, 34' | Wickelformen |

| 35, 35' | Wickelformhalter |
| 36, 36' | Zylinder/Kolben-Einheiten zum Zu- und Wegführen der Wickelformen |
| 37, 37' | Zylinder/Kolben-Einheiten zum Ein- und Ausfahren der Wickelformhalter |
| 40 | Wicklungs-Drahtenden-Anlegestation |
| 41 | Greifer parallelbetätigbare freiprogrammierbare computergesteuerte |
| 50 | Station zum Verbinden der Wicklungs-Drahtenden durch Schweissen, Löten oder Crimpen |
| 60 | Prüfstationen, elektrische |

**Patentansprüche**

1. Vorrichtung zur automatischen Fertigung von Statoren für Elektromotoren, insbesondere für Statoren mit Wickelkopfabstützungen und mit Anschlußstücken zum Fixieren der Wicklungsdrahtenden, bei der längs einer Fertigungsstraße aufeinanderfolgende Bearbeitungsstationen mit voneinander unabhängigem Taktsystem angeordnet sind und Werkstückhalter (1), welche einen Stator (10) durch sämtliche Bearbeitungs stationen (20 - 60) führen, auf zwei synchron und dauernd umlaufenden Transportbändern (16, 16') so gehalten sind, daß sie ohne Anhalten der Transportbänder zur Bearbeitung einzeln und/oder gruppenweise anhaltbar sind, wobei jeder Werkstückhalter (1) portalartig ausgebildet ist und aus zwei mit Führungsplatten (3, 3') versehenen Füßen (2, 2') mit sich nach oben verengenden Stützen (4, 4') besteht, die zur Aufnahme eines Stators (10) in Haltebacken (5, 5') übergehen,
und daß in der Wickelstation (30) Wickelformen (34, 34') in den bereitgehaltenen Stator (10) von oben und unten in diesen einführbar und beidseitig wickelformhalter (35, 35') anbringbar sind.

2. Vorrichtung nach Anspruch 1, <u>dadurch gekennzeichnet</u>, daß beim Anhalten (18) an den einzelnen Bearbeitungsstationen (20, 30, 40, 50, 60, 20') jeder Werkstückhalter (1) von den umlaufenden Transportbändern (11, 11') abhebbar (7, 8, 9) ausgebildet ist.

3. Vorrichtung nach Anspruch 1, <u>dadurch gekennzeichnet</u>, daß am jeden Werkstückhalter (1) an der Oberseite der Haltebacken (5, 5') außerhalb des einspannbaren Stators (10) vier jeweils diagonal zueinander angeordnete Wickeldraht-Hilfsklemmen (6a, 6b, 6c, 6d) vorgesehen sind.

**Claims**

1. Apparatus for the automatic manufacture of stators for electric motors, particularly for stators with coil end supports and with connecting members for fixing the winding wire ends, in which successive processing stations with mutually independent timing systems are arranged along a production line and workpiece holders (1), which guide a stator (10) through all the processing stations (20 - 60), are so mounted on two synchronously and continuously rotating conveyor belts (16, 16') that they can be stopped for processing individually and/or in groups without stopping the conveyor belts, whereby each workpiece holder (1) is constructed in the manner of a gantry and comprises two feet (2, 2') which are provided with guide plates (3, 3') and which have upwardly tapering supports (4, 4') which merge into mounting jaws (5, 5') for receiving a stator (10) and in the winding station (30) winding formers (34, 34') may be introduced from above and below into the stator (10) provided and winding formers (35, 35') may be placed on both sides.

2. Apparatus as claimed in claim 1, characterised in that each workpiece holder (1) is constructed so that on stopping (18) at the individual processing stations (20, 30, 40, 50, 60, 20') it may be lifted up from the rotating conveyor belts (11, 11').

3. Apparatus as claimed in claim 1, characterized in that four mutually diagonally arranged winding wire auxiliary clamps (6a, 6b, 6c, 6d) are provided on each workpiece holder (1) on the upper surface of the mounting jaws (5, 5') outside the clampable stator (10).

**Revendications**

1. Dispositif pour la fabrication de stators de moteurs électriques, en particulier pour des stators comportant des supports de tête de bobinage et des pièces de raccordement pour fixer les extrémites de fil-bobine, dispositif dans lequel sont disposés, le long d'une chaîne de fabrication, des postes d'exécution, se suivant les uns les autres, avec des cadences independantes les unes des autres et des supports de pièces à usiner (1), qui portent un stator (10) vers les differents postes d'exécution (20 - 60), sont maintenus sur deux bandes transporteuses (16, 16') tournant en permanence et synchronisees, de façon telle que l'on peut arrêter les supports, séparément ou en groupe, sans arrêter les bandes transporteuses, chaque support de pièces à usiner (1) ayant la forme d'un portique et étant constitue de deux socles (2, 2') prévus avec des plaques de guidage (3, 3') et avec des supports (4, 4') s'amincissant vers le haut qui sont prolongés en des sors de maintien (5, 5') servant à fixer un stator (10), tandis qu'au poste de bobinage (30), des moules de bobinage (34, 34') peuvent être introduits, par en haut et par en bas, dans le stator mis en position et que des soules de bobinage (35, 35') peuvent lui être appliqués latéralement des deux côtés.

2. Dispositif suivant la revendication 1, caractérisé en ce qu' a l'arrêt (18) aux differents postes d'execution (20, 30, 40, 50, 60, 20'), chaque support de pièce (1) est constitué de façon à pouvoir être soulevé des bandes transporteuses (16, 16') en mouvement.

3. Dispositif suivant la revendication 1, caractérisé en ce que, sur chaque supports de pièces à usiner (1), sur la face supérieure des mors de maintien (5, 5'), extérieurement au stator (10) en serrage, sont prévues quatre pinces auxiliaires a fil de bobinage (6a, 6b, 6c, 6d), disposées chacune diagonalement par rapport à l'autre.

Fig. 2

Fig. 2a